# EUROPÄISCHE PATENTANMELDUNG

(11) **EP 4 063 717 A1**
(43) Veröffentlichungstag der Anmeldung: **28.09.2022**
(21) Anmeldenummer: 22162604.7
(22) Anmeldetag: 17.03.2022
(51) Int. Cl.: F21S 8/02, F21V 7/00, F21V 8/00, F21Y 115/10, F21Y 103/33

(54) **LEUCHTE MIT VORDERSEITIGER KÜHLFUNKTION**

(30) Priorität: 26.03.2021 DE 202021101611 U
(71) Anmelder: Zumtobel Lighting GmbH, 6850 Dornbirn (AT)
(72) Erfinder: Machate, Andreas, 6850 Dornbirn (AT)
(74) Vertreter: Kiwit, Benedikt

(57) **Zusammenfassung**

Die vorliegende Erfindung betrifft eine Leuchte (1), aufweisend einen Leuchtenraum (2), ein Leuchtmittel (3) zur Abgabe von Licht in den Leuchtenraum (2), ein Leuchtengehäuse (4) mit einer den Leuchtenraum (2) an einer Vorderseite der Leuchte (1) begrenzenden Gehäusewand (40), wobei die Gehäusewand (40) eine Öffnung (41) zur Lichtabgabe des in den Leuchtenraum (2) abgegebenen Lichts des Leuchtmittels (3) nach außen (A) in einer Hauptabstrahlrichtung (H) der Leuchte (1) aufweist, und einen Lichtleiter (5), wobei sich der Lichtleiter (5) derart zwischen dem Leuchtmittel (3) und dem Leuchtenraum (2) erstreckt, um das von dem Leuchtmittel (3) abgegebene Licht über eine Lichteinkoppelseite (50) in den Lichtleiter (5) einzukoppeln und das so eingekoppelte Licht über einen Lichtauskoppelbereich (51) in den Leuchtenraum (2) zur Lichtabgabe über die Öffnung (41) auszukoppeln, wobei das Leuchtmittel (3) in thermischem Kontakt mit einer zum Leuchtenraum (2) hin gerichteten Innenseite (43) der Gehäusewand (40) steht.

## Beschreibung

Die vorliegende Erfindung betrifft eine Leuchte mit einem Leuchtmittel zur Lichtabgabe von Licht über einen Lichtleiter in einen Leuchtenraum der Leuchte und dann durch eine Öffnung in einem den Leuchtenraum zumindest vorderseitig der Leuchte begrenzenden Leuchtengehäuse nach außen.

Solche Leuchten sind grundsätzlich bekannt. Zur Einkopplung des Lichts in den Lichtleiter werden hier insbesondere Edge-lit-Lösungen oder Back-lit-Lösungen verwendet. Bei Edge-lit-Lösungen werden die Leuchtmittel seitlich eines in der Regel planaren Lichtleiters angeordnet und strahlen in diesen ein. Die LEDs sind dann beispielsweise an einer Seitenwand des Leuchtengehäuses angeordnet. Edge-lit-Lösungen weisen zudem in der Regel eine besonders flache Bauform der Optik auf, so dass dreidimensionale Optiken zur Erzeugung blendfreien Lichts nicht oder nur schlecht realisiert werden können. Bei einer Back-lit-Lösung werden die Leuchtmittel rückseits und oft auch flächig verteilt über einen in der Regel planaren Lichtleiter angeordnet, um in diesen nach vorne einzustrahlen bzw. ein entsprechendes optisches Element nach vorne zu durchstrahlen. Bei der letztgenannten Lösung werden die Leuchtmittel in der Regel an einer Rückseite des Leuchtengehäuses entsprechend angeordnet.

Die bekannten Lösungen positionieren die Leuchtmittel somit an optisch bevorzugten Positionen. Die dort entstehende Betriebswärme muss dann von ebendiesen Positionen abgeführt werden, was teils nur schwierig umsetzbar ist.

Beispielsweise bei Verwendung einer Leuchte als Einbauleuchte ist der Großteil ebendieser Leuchte in der Regel in einem Einbauraum angeordnet, der nur eine schlechte Kühlung ermöglicht. In der Regel sind die Leuchtmittel zu den zuvor genannten optischen Zwecken jedoch an schlecht gekühlten oder schlecht kühlbaren Bereichen der Einbauleuchte vorgesehen.

Hinzu kommt, dass durch zunehmend strengere Normen bezüglich der Wärmemessung insbesondere von Einbauleuchten im Prüflabor bei bestehenden Lösungen oft eine erhöhte Kühlleistung erforderlich ist. So ändert sich beispielsweise eine entsprechende Leuchtennorm dahingehend, dass bisher zur Prüfung in Holzkisten gemessene Einbauleuchten zukünftig mit einer Dämpfstoffschüttung abgedeckt werden, was deren Kühlleistung eben im eingebauten Bereich beeinträchtigt. Zwar kann der Norm dahingehend begegnet werden, entsprechende Leuchten zukünftig teilweise nur niedriger zu bestromen oder die maximal zulässige Umgebungstemperatur solcher Leuchten geringer anzugeben. Dies wirkt sich jedoch nachteilig hinsichtlich der Einsatzmöglichkeiten der Leuchten aus. Dies trifft insbesondere auf eingebaute Strahler, wie Spotlights oder Downlights, wegen ihrer hohen Wärmedichte zu. Grundsätzlich kann dieses Problem jedoch bei allen Leuchtentypen auftreten.

Es ist somit eine Aufgabe der vorliegenden Erfindung, eine Leuchte der eingangs genannten Art bereitzustellen, welche eine verbesserte Kühlleistung aufweist.

Diese Aufgabe wird durch den Gegenstand des unabhängigen Anspruchs gelöst. Die abhängigen Ansprüche bilden den zentralen Gedanken der Erfindung in besonders vorteilhafter Weise weiter.

Die Erfindung betrifft daher eine Leuchte, welche einen Leuchtenraum aufweist. Zudem weist die Leuchte ein Leuchtmittel zur Abgabe von Licht in den Leuchtenraum auf. Des Weiteren weist die Leuchte ein Leuchtengehäuse mit einer den Leuchtenraum an einer Vorderseite der Leuchte begrenzenden Gehäusewand auf. Die Gehäusewand wiederum weist eine Öffnung zur Lichtabgabe des in den Leuchtenraum abgegebenen Lichts des Leuchtmittels nach außen in einer Hauptabstrahlrichtung der Leuchte auf. Die Leuchte weist ferner einen Lichtleiter auf. Der Lichtleiter erstreckt sich derart zwischen dem Leuchtmittel und dem Leuchtenraum, um das von dem Leuchtmittel abgegebene Licht über eine Lichteinkoppelseite in den Lichtleiter einzukoppeln und das so eingekoppelte Licht über einen Lichtauskoppelbereich in den Leuchtenraum zur Lichtabgabe über die Öffnung auszukoppeln. Das Leuchtmittel steht in thermischem Kontakt mit einer zum Leuchtenraum hin gerichteten Innenseite der Gehäusewand.

Durch die thermische Kopplung der Leuchtmittel an der Vorderseite der Leuchte über die dort vorgesehene Gehäusewand kann eine Kühlung über nach außen exponierte Leuchtenbereiche im Betriebszustand ermöglicht werden. Da das Licht über einen entsprechenden Lichtleiter zu einer beliebigen gewünschten Lichtabgabeposition geführt werden kann, wirkt sich die zu thermischen Zwecken gewählte Position des Leuchtmittels nicht auf die optische Funktion der Leuchte aus. Somit kann bei jedem Leuchtentyp und insbesondere auch bei Einbauleuchten auch mit Blick auf strengere Prüfnormen eine ausreichende Kühlleistung bei gleichbleibenden sonstigen Betriebsbedingungen erzielt werden.

Da die Kühlfunktion in bestehende Leuchtenkomponenten, wie hier das Leuchtengehäuse, integriert ist, können zusätzliche Kühlkörper als Extrabauteile entfallen. Durch die verbesserte Kühlleistung kann zudem die Lebensdauer der Leuchtmittel, wie vorzugsweise LEDs, erhöht werden. Die Leuchte kann somit auch bei Bedarf höher bestromt werden, wenn dies erforderlich ist, während die geforderten Richtwerte aufgrund der optimierten Kühlleistung eingehalten werden können. Auch ist es so möglich, vergleichbare Leuchten bei höheren zulässigen Umgebungstemperaturen einzusetzen, was deren Einsatzgebiete weiter erhöht. Auch kann eine so ausgebildete Leuchte beispielsweise in Form einer Einbauleuchte ebenfalls in isolierten Einbausituationen, wie in isolierte Raumdecken, sicher integriert werden.

Die Lichteinkoppelseite kann durch eine Stirnseite des Lichtleiters gebildet werden. Somit kann eine besonders einfache Einkopplung des Lichts in den Lichtleiter geschehen. Das eingekoppelte Licht kann sich so bevorzugt durch Totalreflektion möglichst effektiv in dem Lichtleiter fortpflanzen.

Das Leuchtmittel liegt der Lichteinkoppelseite bzw. dessen Stirnseite besonders bevorzugt direkt gegenüber, um das Licht des Leuchtmittels möglichst effektiv in den Lichtleiter einzukoppeln.

Der Lichtauskoppelbereich kann auf unterschiedliche Weise und bezüglich der gewünschten Lichtaufgabe optimiert bereitgestellt und/oder ausgebildet sein. So kann der Lichtauskoppelbereich beispielsweise durch eine Verletzung einer flächigen Seite des Lichtleiters bereitgestellt werden. Dies ermöglicht räumlich besonders flexibel vorzusehende und dem jeweiligen Zweck optimiert bereitgestellte Lichtauskoppelbereiche. Auch kann der Lichtauskoppelbereich durch Auskoppelstrukturen an einer flächigen Seite des Lichtleiters bereitgestellt sein. Denkbar sind hier beispielsweise Auskoppelvorsprünge bzw. Linsenelemente und dies besonders bevorzugt in Rasteranordnung. Somit kann eine besonders definierte Lichtauskopplung auch über einen großen bzw. gewünschten Bereich ermöglicht werden. Auch ist es denkbar, dass der Lichtauskoppelbereich durch eine bevorzugt der Lichteinkoppelseite gegenüberliegende Stirnseite des Lichtleiters gebildet ist. Somit kann der Lichtauskoppelbereich in besonders einfacher Weise und ohne zusätzliche strukturelle Bereiche oder Elemente bereitgestellt werden. Ferner ist es denkbar, dass der Lichtauskoppelbereich durch einen Totalreflexion-vermeidenden bzw. geometrischen bzw. dreidimensionalen Teilabschnitt des Lichtleiters gebildet ist. Dabei kann es sich bspw. um einen Lichtleiterabschnitt mit einer derartigen Biegung handeln, dass dieser keine Totalreflexion mehr zulässt und das Licht so über diesen Geometrie-Abschnitt des Lichtleiters aus diesem ausgekoppelt wird. Auch auf diese Weise können zusätzliche Strukturen und Elemente zur Lichtauskopplung vermieden werden, während die Auskopplung hinsichtlich Effizienz und Richtung beliebig eingestellt werden kann.

Durch die Verwendung eines Lichtleiters, welcher das Licht bevorzugt mittels Totalreflexion über diesen Lichtleiter verteilt, kann das von dem Leuchtmittel abgegebene Licht an jede beliebige Position in dem Leuchtenraum geführt werden, um so über jede beliebige Art von Lichtauskoppelbereichen in jeder gewünschten Weise (bspw. Richtung, Streuung/Fokussierung, Intensität, etc.) zur Lichtabgabe aus dem Lichtleiter ausgekoppelt zu werden. Die Leuchte ist somit nicht nur thermisch optimiert, sondern auch optisch vielfältig einsetzbar.

In einer bevorzugten Ausgestaltungsform ist der Lichtauskoppelbereich entgegen der Hauptabstrahlrichtung gesehen in Verlängerung der Öffnung angeordnet. Somit kann eine einfache Lichtführung ermöglicht werden. Auch ist es denkbar, dass der Lichtauskoppelbereich bezüglich der Hauptabstrahlrichtung mit der Öffnung fluchtet. Dies ermöglicht eine möglichst harmonische, direkte und effiziente Lichtabgabe. Auch ist es denkbar, dass der Lichtauskoppelbereich bezüglich des Leuchtenraumes auf der der Öffnung gegenüberliegenden Seite angeordnet ist. Somit kann das Licht innerhalb des Leuchtenraumes eine möglichst große Strecke zurücklegen, so dass neben etwaig gewünschten Lichtaufgaben, beispielsweise zur Erzeugung blendfreien Lichts, auch eine durch sonstige Mittel oder die Form der Leuchte gewünschte Lichtführung beliebig angewendet werden kann.

Vorzugsweise kann der Lichtleiter gebogen ausgebildet sein, um den Leuchtenraum wenigstens teilweise zu umspannen. Somit kann das Licht von der Gehäusewand auch mittels Totalreflexion an jeden Bereich in dem Leuchtenraum geführt werden. Auch kann so eine gewünschte Lichtabgabe durch entsprechend bereitgestellte Lichtauskoppelbereiche an jedem beliebigen Punkt des Leuchtenraumes erfolgen.

Der Lichtleiter kann eine Topfform oder eine Schalenform oder eine Wannenform oder auch jegliche andere und bevorzugt dreidimensionale Form aufweisen. Die Topfform bzw. Schalenform bietet sich insbesondere bei kompakten und beispielsweise rotationssymmetrischen Leuchten an. Eine Wannenform ist besonders bevorzugt bei Langfeldleuchten denkbar. Der Lichtleiter kann somit entsprechend des Leuchtentyps optimiert ausgebildet sein. Zudem bieten die vorbeschriebenen Formen eine einfache Herstellung des genannten Lichtleiters.

Die Leuchte kann ferner einen Reflektor aufweisen, welcher den Leuchtenraum wenigstens teilweise begrenzt, um in den Leuchtenraum abgegebenes Licht der Leuchtmittel über die Öffnung gerichtet abzugeben. Somit kann die Effizienz der Leuchte weiter erhöht sowie eine gewünschte Lichtabgabecharakteristik gezielt erzeugt werden.

Der Reflektor kann sich wenigstens teilweise zwischen dem Lichtleiter und dem Leuchtenraum erstrecken. Somit sind die Komponenten möglichst kompakt bereitgestellt. Zudem kann der Lichtleiter so geschützt angeordnet sein.

Der Reflektor kann wenigstens teilweise integral mit dem Gehäuse ausgebildet sein. Der Aufbau der Leuchte ist somit vereinfacht, was sich auch in einer vereinfachten Montage der Leuchte widerspiegelt. Selbstverständlich kann der Reflektor auch lösbar vorgesehen sein, was wiederum die Anpassbarkeit der Lichtabgabecharakteristik der Leuchte erhöht.

Der Lichtleiter kann auf einer von der Öffnung oder von dem Leuchtenraum abgewandten Seite ein Reflektorelement aufweisen. Dies kann zum einen beispielsweise dem Zurückwerfen von Streulicht in den Lichtleiter dienen und somit die Effektivität der Leuchte insgesamt erhöhen. Das Reflektorelement kann bevorzugt direkt an dem Lichtleiter anliegen und dies vorzugsweise an einer flächigen Seite des Lichtleiters. Auch kann das Reflektorelement beispielsweise als Beschichtung auf dem Lichtleiter direkt aufgebracht sein. Das Reflektorelement kann somit in beliebiger Weise und an optisch optimierten Positionen vorgesehen werden, um die Effektivität und Effizienz der Leuchte insgesamt zu erhöhen.

Das Leuchtmittel kann wenigstens eine LED aufweisen. Vorzugsweise umfasst das Leuchtmittel ein LED-Modul mit auf einer Platine aufgebrachter LED bzw. auf der Platine aufgebrachten mehreren LEDs. Somit kann ein besonders langlebiges und Ressourcenschonendes Leuchtmittel eingesetzt werden.

Die Platine kann eine längliche und bevorzugt geradlinige Form aufweisen. Dies insbesondere, wenn der Lichtleiter einen entsprechenden länglichen Lichteinkoppelbereich aufweist, wie beispielsweise bei der Wannenform. Auch ist es denkbar, dass die Platine eine gebogene Form aufweist, wie eine Ringform, eine Kreisform oder eine ring- oder kreissegmentartige Form. Dies ist insbesondere dann von Vorteil, wenn die Lichteinkoppelseite entsprechend gebogen ausgebildet ist, wie beispielsweise bei der Topfform oder Schalenform.

Eine Lichtabgaberichtung des Leuchtmittels zum Lichtleiter hin ist bevorzugt der Hauptabstrahlrichtung der Leuchte entgegengesetzt. Das Leuchtmittel kann somit möglichst kompakt und thermisch optimiert an der Gehäusewand vorgesehen werden. Durch den Einsatz des bereits zuvor beschriebenen Lichtleiters kann trotz der bezüglich der Hauptabstrahlrichtung vermeintlich ungünstigen Lichtabgaberichtung das Licht des Leuchtmittels dennoch derart in den Leuchtenraum eingekoppelt werden, dass jede gewünschte Lichtabgabecharakteristik - gegebenenfalls in Verbindung mit weiteren optischen Elementen wie den vorbeschriebenen Reflektoren - erzielt werden kann.

Das Leuchtmittel bzw. die Platine, wenn vorhanden, kann in direktem thermischen Kontakt mit der Innenseite der Gehäusewand stehen; mithin direkt auf der Gehäusewand angeordnet bzw. aufgebracht sein. Somit kann eine besonders effektive thermische Kopplung bereitgestellt werden, was die Kühlleistung der Leuchte insgesamt weiter erhöht. Auch kann so eine besonders kompakte Bauweise der Leuchte erzielt werden.

Die Leuchte kann mehrere der Leuchtmittel aufweisen, welche vorzugsweise mit ihrer Platine, soweit vorhanden, jeweils in thermischem Kontakt mit der Innenseite der Gehäusewand stehen und jeweils ihr Licht über die Lichteinkoppelseite in den oder gegebenenfalls mehrere Lichtleiter entsprechend einkoppeln. Somit kann das Leuchtmittel optimiert bereitgestellt werden, um jede gewünschte Lichtabgabecharakteristik zu erzielen. Auch bei großflächigen oder langen Leuchten kann so jede beliebige Lichtabgabecharakteristik erzielt werden. Auch kann so das Handling der Lichtquelle vereinfacht werden. Da die Leuchtmittel alle in thermischem Kontakt mit der Innenseite der Gehäusewand stehen, ergibt sich die thermisch bevorzugte Kühlleistung in gleicher Weise auch bei Verwendung mehrerer Leuchtmittel.

Die Leuchtmittel können an gegenüberliegenden Seiten der Öffnung vorgesehen sein. Dies bietet sich bevorzugt bei einem Lichtleiter in Wannenform an. Auch können die Leuchtmittel die Öffnung wenigstens teilweise oder vollständig umgeben. Dies ist insbesondere zur Erzielung einer möglichst homogenen Lichteinkopplung vorteilhaft. Insbesondere lässt sich dies besonders vorteilhaft bei einer Topfform oder Schalenform aber grundsätzlich auch bei jeder anderen Lichtleiterform anwenden.

Die Innenseite ist bevorzugt entgegen der Hauptabstrahlrichtung gerichtet. Somit können dort vorgesehene Bauteile bezüglich der Öffnung möglichst nicht sichtbar in dem Leuchtenraum bzw. der Leuchte verstaut werden.

Die Gehäusewand oder wenigstens deren Innenseite kann sich flächig erstrecken und dies vorzugsweise parallel zu einer Ebene. Somit kann eine vorteilhafte Montageebene beispielsweise für die Leuchtmittel oder andere Komponenten bereitgestellt werden. Auch kann so das Leuchtengehäuse einfach bereitgestellt werden.

Das oder die Leuchtmittel liegen bevorzugt direkt flächig an der Innenseite an, um den thermischen Kontakt bereitzustellen. Durch den flächigen Kontakt kann besonders effektiv eine hohe Kühlleistung erzielt werden. Auch kann so eine Montage der Leuchtmittel vereinfacht sein.

Eine von dem Leuchtenraum abgewandte und nach außen gerichtete Außenseite der Gehäusewand kann sich bevorzugt flächig erstrecken; dies vorzugsweise parallel zu einer oder der vorgenannten Ebene. Somit kann das äußere Erscheinungsbild der Leuchte möglichst ästhetisch ansprechend bereitgestellt werden. Auch kann so das Leuchtengehäuse einfach bereitgestellt werden.

Es ist jedoch auch denkbar, dass die Außenseite ferner Strukturen aufweist. Diese können rein zu ästhetischen Zwecken vorgesehen sein. Auch ist es denkbar, dass diese Strukturen vorzugsweise Kühlstrukturen, wie Kühlrippen, bilden, um so die Effektivität der Leuchte hinsichtlich ihrer Kühlleistung weiter zu erhöhen.

Das Leuchtengehäuse ist besonders bevorzugt aus einem gut Wärme-leitenden Material, wie Aluminium, hergestellt bzw. mit einem gut Wärme-leitenden Material beschichtet. Beispielsweise kann das Leuchtengehäuse aus einem Blech gebildet sein. Denkbar ist hier beispielsweise die Herstellung mittels eines Stanz-Biege-Prozesses. Auch ein Aluminiumdruckgussteil ist als Leuchtengehäuse denkbar. Durch die Materialwahl des Leuchtengehäuses kann die Kühlleistung weiter optimiert bzw. in gewünschter Weise eingestellt werden.

Das Leuchtengehäuse kann eine Tragstruktur zur Befestigung der Leuchte an einem Montagebereich aufweisen. Bei der Tragstruktur kann es sich beispielsweise um eine integral ausgebildete oder integral angeordnete Tragstruktur handeln. Auch kann das Leuchtengehäuse beispielsweise bewegbar (wie verschwenkbar) an der Tragstruktur angeordnet sein, um beispielsweise eine Veränderung der Lichtabgabe bewirken zu können. Auch kann es sich bei der Tragstruktur beispielsweise um Abhängeseile für eine Pendelleuchte handeln. Nicht zuletzt kann es sich bei der Tragstruktur auch um eine solche zur Verankerung in einer Einbauöffnung zur Bildung einer Einbauleuchte handeln. Der Montagebereich kann dabei jede Art von Montagemöglichkeit umfassen, wie bspw. eine Wand oder Decke oder ein (bspw. separates) Montageelement bspw. zur lösbaren Befestigung der Leuchte an einer Wand, einem Abhängeseil oder in einem Einbauraum.

Die Tragstruktur kann sich besonders bevorzugt zur Seite des Leuchtenraumes hin oder entgegen der Hauptabstrahlrichtung von der Gehäusewand weg rückseitig erstrecken. Somit ist die Tragstruktur außerhalb eines Hauptlichtabgabebereichs und insbesondere außerhalb des Leuchtenraumes vorgesehen, so dass sie die Lichtabgabe nicht behindert.

Die Tragstruktur kann integral mit der Gehäusewand ausgebildet sein. Diese kann somit in besonders einfacher Weise bereitgestellt werden. Auch ist so eine Montage erleichtert.

Die Leuchte kann folglich eine Einbauleuchte, aber auch eine Anbauleuchte, oder eine Pendelleuchte sein. Das Einsatzgebiet der Leuchte ist somit bezüglich des Leuchtentyps unbegrenzt.

Die Leuchte kann jegliche Form aufweisen, insbesondere bevorzugt eine längliche Form, beispielsweise zur Bildung einer Langfeldleuchte. Auch kann die Leuchte eine kompaktere Bauform und beispielsweise eine rotationssymmetrische Form, aufweisen. Die Leuchte kann beispielsweise eine runde oder eckige, wie eine quadratische oder rechteckige oder sonst wie vieleckige Form aufweisen.

Weitere Ausgestaltungen und Vorteile der vorliegenden Erfindung werden anhand der Figuren der begleitenden Zeichnungen beschrieben. Es zeigen:
- **Fig. 1**: eine seitliche Schnittansicht einer Leuchte gemäß einem ersten Ausführungsbeispiel der vorliegenden Erfindung,
- **Fig. 2**: eine seitliche Schnittansicht einer Leuchte gemäß einem zweiten Ausführungsbeispiel der vorliegenden Erfindung,
- **Fig. 3**: eine perspektivische Vorderansicht der erfindungsgemäßen Leuchte gemäß Fig. 2,
- **Fig. 4**: eine perspektivische Rückansicht der erfindungsgemäßen Leuchte gemäß Fig. 2,
- **Fig. 5**: eine perspektivische Rückansicht der erfindungsgemäßen Leuchte gemäß Fig. 4 in Explosionsdarstellung,
- **Fig. 6**: eine seitliche Schnittansicht einer Leuchte gemäß einem dritten Ausführungsbeispiel der vorliegenden Erfindung,
- **Fig. 7**: eine seitliche Schnittansicht einer Leuchte gemäß einem vierten Ausführungsbeispiel der vorliegenden Erfindung,
- **Fig. 8**: eine perspektivische Rückansicht der erfindungsgemäßen Leuchte gemäß Fig. 7 in Explosionsdarstellung,
- **Fig. 9**: eine seitliche Schnittansicht einer Leuchte gemäß einem fünften Ausführungsbeispiel der vorliegenden Erfindung,
- **Fig. 10**: eine seitliche Schnittansicht eines Details X der erfindungsgemäßen Leuchte gemäß Fig. 9.
- **Fig. 11**: eine seitliche Schnittansicht einer Leuchte gemäß einem sechsten Ausführungsbeispiel der vorliegenden Erfindung, und
- **Fig. 12**: eine seitliche Schnittansicht einer Leuchte gemäß einem siebten Ausführungsbeispiel der vorliegenden Erfindung.

Die Figuren zeigen unterschiedliche Ausführungsbeispiele einer Leuchte 1 gemäß der vorliegenden Erfindung. Bei der Leuchte 1 kann es sich um jegliche Art von Leuchten, wie beispielsweise Einbauleuchten, Anbauleuchten oder Pendelleuchten handeln. Die hier dargestellten Ausführungsbeispiele beschreiben alle Einbauleuchten, wobei die vorliegende Erfindung hierauf nicht beschränkt ist.

Die Leuchten 1 in den dargestellten Ausführungsbeispielen haben alle in der Regel eine im Wesentlichen rotationssymmetrische Form bzw. eine recht kompakte Form. Die hier dargestellten Leuchten 1 haben bevorzugt eine runde Form. Es sind jedoch auch andere Formen, wie beispielsweise eckige Formen wie quadratische oder rechteckige Formen, denkbar. Auch ist es denkbar, dass die Leuchte 1 eine längliche Form aufweist und beispielsweise als Langfeldleuchte ausgebildet ist. Als längliche Leuchten 1 kommen insbesondere lineare Leuchten 1 aber auch andere längliche Leuchten 1 infrage. Auch kann es sich bei der Leuchte 1 um eine flächige Leuchte 1 handeln. Als Beispiel für Langfeldleuchten ist es denkbar, bei den Darstellungen in seitlicher Schnittansicht sich die Leuchte 1 senkrecht zur Bildebene mit linearer Erstreckung gleichen Querschnitts vorzustellen.

Die Leuchte 1 weist einen Leuchtenraum 2 auf. Der Leuchtenraum 2 dient bevorzugt der Durchführung, Richtung bzw. Umlenkung oder Streuung, Mischung, etc. von Licht zur Lichtabgabe der Leuchte 1 nach außen.

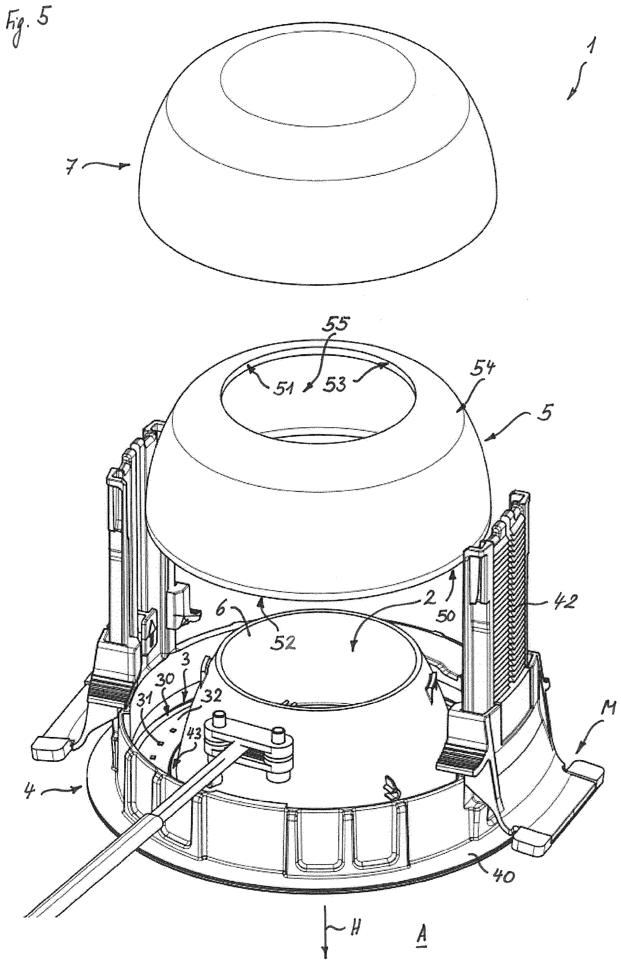

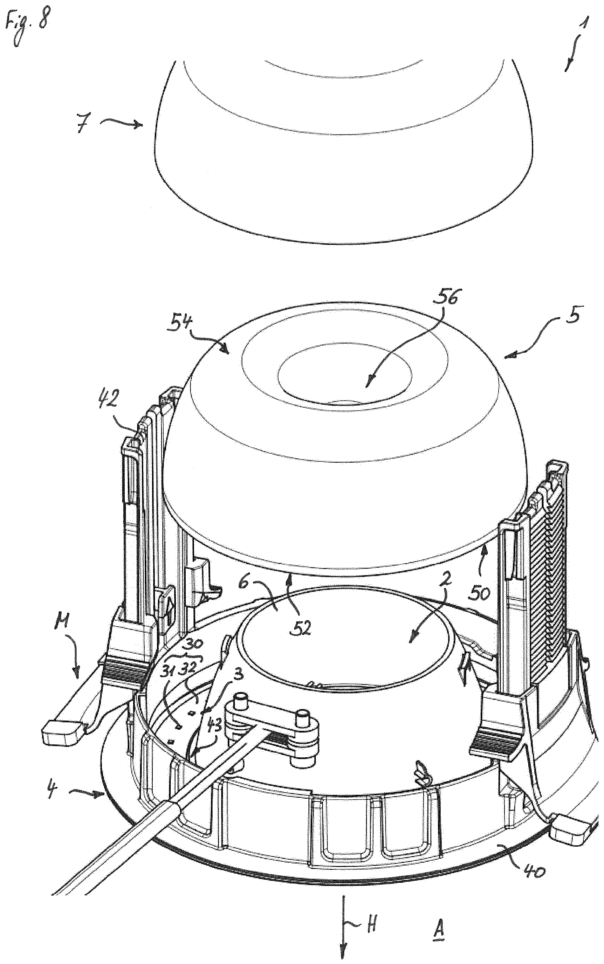

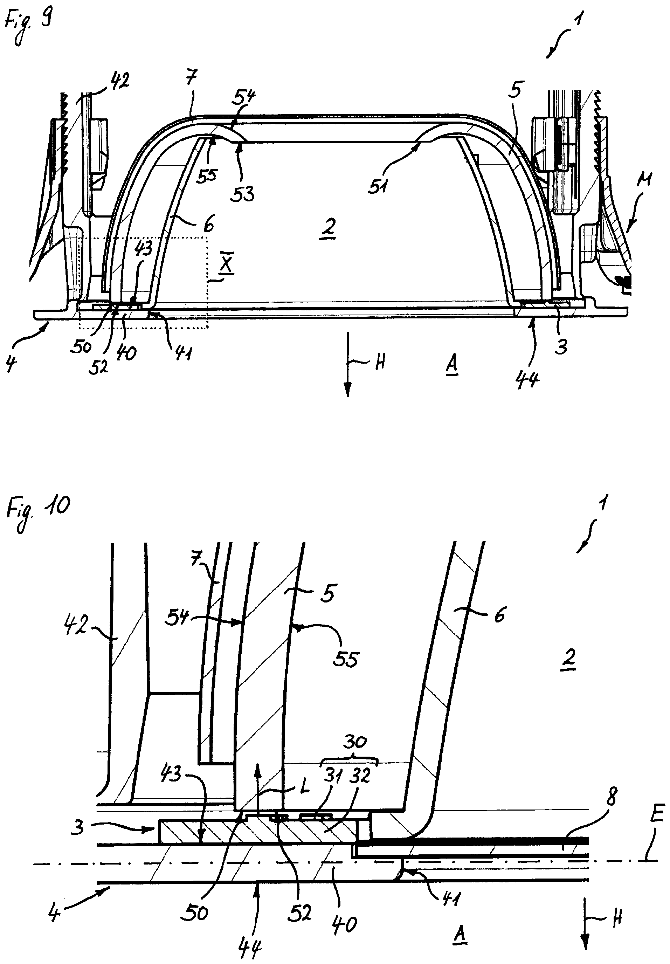

Ferner weist die Leuchte ein Leuchtmittel 3 zur Lichtabgabe von Licht in den Leuchtenraum 2 auf. Das Leuchtmittel 3 kann dabei wenigstens eine LED 31 aufweisen. Besonders bevorzugt kann das Leuchtmittel 3 ein LED-Modul 30 umfassen. Dieses wiederum kann, mit Verweis auf die Detaildarstellung der Fig. 10 sowie Figuren 5 und 8, eine Platine 32 mit darauf aufgebrachter LED 31 umfassen. Wie insbesondere den Darstellung der Figuren 5 und 8 zu entnehmen ist, kann die Platine 32 hier mehrere LEDs 31 zur Lichtabgabe aufweisen. Die Platine 32 kann - insbesondere in Abhängigkeit von der grundsätzlichen Form der Leuchte 1 - eine längliche und bevorzugt geradlinige Form aufweisen. Alternativ kann die Platine 32 auch eine wie in den Ausführungsbeispielen gezeigte gebogene Form aufweisen (vgl. bspw. Figuren 5 und 8). Dargestellt ist hier insbesondere eine Ringform bzw. eine Kreisform. Auch ist es denkbar, dass die Platine 32 eine andere gebogene Form aufweist, wie beispielsweise eine ring- oder kreissegmentartige Form.

Die Leuchte 1 weist des Weiteren ein Leuchtengehäuse 4 auf. Das Leuchtengehäuse 4 wiederum weist eine den Leuchtenraum 2 an einer Vorderseite der Leuchte 1 begrenzenden Gehäusewand 40 auf. Die Gehäusewand 40 wiederum weist eine Öffnung 41 zur Lichtabgabe des in den Leuchtenraum 2 abgegebenen Lichts des Leuchtmittels 3 nach außen A in einer Hauptabstrahlrichtung H der Leuchte 1 auf. Das Leuchtengehäuse 4 ist bevorzugt aus einem gut Wärme-leitenden Material, wie Aluminium, hergestellt. Alternativ oder ergänzend ist es denkbar, dass das Leuchtengehäuse 4 mit einem gut Wärme-leitenden Material beschichtet ist. So kann das Leuchtengehäuse 4 beispielsweise aus einem Blech (bspw. in einem Stanz-Biege-Prozess) oder als Aluminiumdruckguss und dergleichen hergestellt sein. Wenigstens die Gehäusewand 40 ist aus dem vorbeschriebenen gut Wärme-leitenden Material hergestellt oder mit diesem beschichtet.

Die Öffnung 41 kann bevorzugt mit einer Licht-durchlässigen Abdeckung 8 wenigstens teilweise oder, wie bspw. Fig. 10 zu entnehmen ist, bevorzugt vollständig abgedeckt sein. Dabei kann es sich rein um eine Schutzabdeckung 8 zum Schutz des Leuchteninneren vor Eingriffen oder Schmutz handeln. Es ist auch denkbar, dass die Abdeckung 8 optische Funktionen aufweist, indem sie bspw. als Linse oder Streuscheibe und dergleichen ausgebildet ist. Auch kann die Abdeckung 8 mehrere bevorzugt in Sandwichbauweise in Richtung der Hauptabstrahlrichtung H angeordnete Elemente aufweisen. Diese können wenigstens teilweise flächig aneinander anliegen. Die Abdeckung 8 kann gegenüber dem Leuchtengehäuse 4 abgedichtet sein, so dass die Leuchte 1 bevorzugt gemäß einer definierten IP-Schutzklasse gegen Staub und/oder Wasser abgedichtet ist.

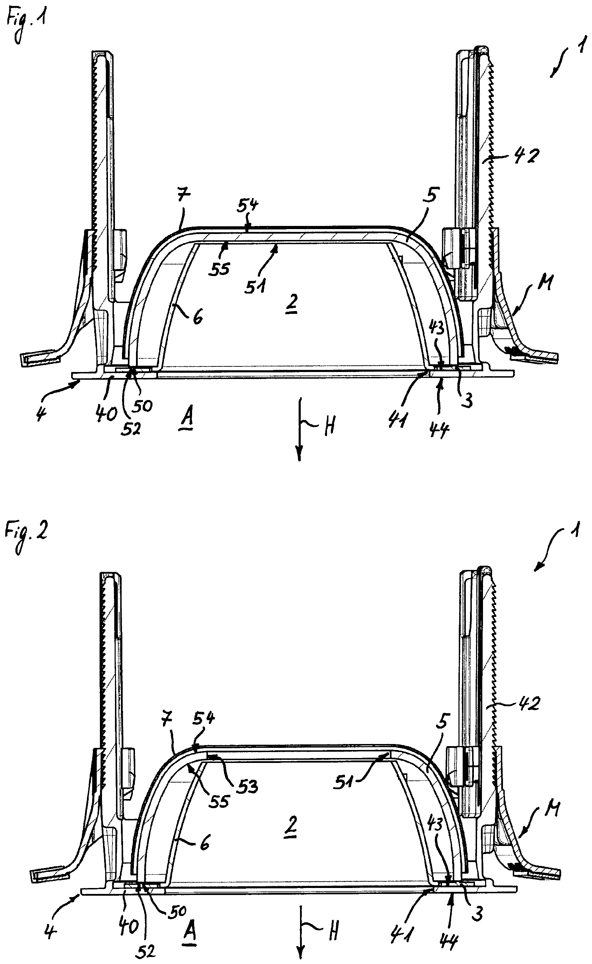

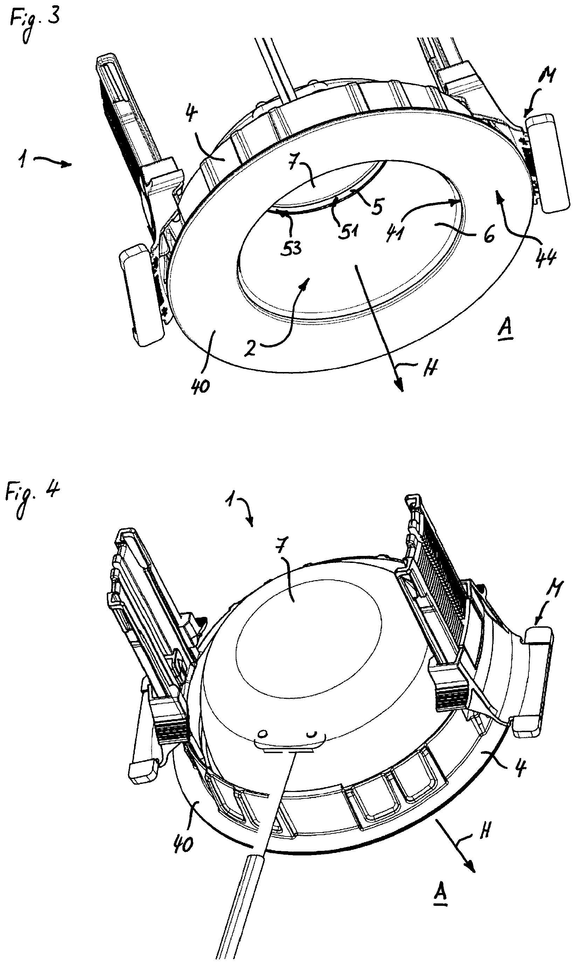

Wie insbesondere den Figuren 1-9 zu entnehmen ist, kann das Leuchtengehäuse 4 ferner eine Tragstruktur 42 zur Befestigung der Leuchte 1 an einem Montagebereich M aufweisen. Die Tragstruktur 42 erstreckt sich hier zur Seite des Leuchtenraumes 2 hin und hier beispielhaft an zwei gegenüberliegenden Seiten seitlich des Leuchtenraumes 2 rückseitig. Die Tragstruktur 42 erstreckt sich hier entgegen der Hauptabstrahlrichtung H von der Gehäusewand 40 weg rückseitig. In der hier dargestellten Ausführungsform ist die Tragstruktur 42 integral mit der Gehäusewand 40 ausgebildet. Diese Komponenten können jedoch beispielsweise auch separat bereitgestellt sein und dann miteinander lösbar oder unlösbar verbunden werden. Der Montagebereich M wird hier beispielsweise durch zwei gegenüberliegende Rastaufnahmeteile gebildet, in welche die Leuchte 1 mit ihren Tragstrukturen 42 beispielsweise längs in den Darstellungen nach oben rastend eingeschoben werden kann. Diese Verbindung ist besonders bevorzugt bei Einbauleuchten vorteilhaft. Die Tragstruktur 42 kann jedoch auch in anderer Weise bereitgestellt sein und beispielsweise mittels starrer Verbindungskörper, einer direkten Befestigungsfläche oder auch als Pendelaufhängung und dergleichen ausgebildet sein.

Die Leuchte 1 weist des Weiteren einen Lichtleiter 5 auf. Der Lichtleiter 5 erstreckt sich derart zwischen dem Leuchtmittel 3 und dem Leuchtenraum 2, um das von dem Leuchtmittel 3 abgegebene Licht über eine Lichteinkoppelseite 50 in den Lichtleiter 5 einzukoppeln und das so eingekoppelte Licht über einen Lichtauskoppelbereich 51 in den Leuchtenraum 2 zur Lichtabgabe über die Öffnung 41 auszukoppeln.

Wie insbesondere der Darstellung der Fig. 10 zu entnehmen ist, kann die Lichteinkoppelseite 50 durch eine Stirnseite 52 des Lichtleiters 5 gebildet sein. Das Leuchtmittel 3 liegt der Lichteinkoppelseite 50 - hier bevorzugt gebildet durch die Stirnseite 52 - vorzugsweise direkt gegenüber und hier unmittelbar benachbart zu dieser oder auch direkt an dieser an. Somit kann eine möglichst effektive Lichteinkopplung gewährleistet werden.

Der Lichtleiter 5 ist besonders bevorzugt gebogen ausgebildet, um den Leuchtenraum 2 wenigstens teilweise zu umspannen. Auf diese Weise kann das über die Lichteinkoppelseite 50 eingekoppelte Licht des Leuchtmittels 3 an jede beliebige Stelle des Leuchtenraumes 2 geführt werden, wie im Weiteren noch beschrieben wird.

Der Lichtleiter 5 kann bevorzugt, wie den Ausführungsbeispielen zu entnehmen ist, eine Topfform oder Schalenform aufweisen. Im Falle von länglichen Leuchten 1 kann der Lichtleiter 5 beispielsweise auch eine Wannenform aufweisen. Die Erfindung ist hierauf jedoch nicht beschränkt, solang der Lichtleiter 5 derart ausgebildet ist, dass er sich zwischen dem Leuchtmittel 3 und dem Leuchtenraum 2 erstreckt, um das von dem Leuchtmittel 3 abgegebene Licht entsprechend in den Leuchtenraum 2 zur Lichtabgabe über die Öffnung 41 bereitzustellen.

Eine entsprechende Lichtauskopplung über die zuvor genannten Lichtauskoppelbereiche 51 kann auf unterschiedlichste Weise geschehen, von denen einige in den Ausführungsbeispielen gezeigt sind und im Weiteren beschrieben werden.

Optional kann die Leuchte 1 ferner einen Reflektor 6 aufweisen, welcher, wie den Ausführungsbeispielen der Figuren 1-10 zu entnehmen ist, den Leuchtenraum 2 wenigstens teilweise begrenzt, um in den Leuchtenraum 2 abgegebenes Licht der Leuchtmittel 3 über die Öffnung 41 gerichtet abzugeben. Der Reflektor 6 ist gemäß den Ausführungsbeispielen hier ebenso topfförmig ausgebildet, wobei auch andere Formen grundsätzlich denkbar sind. Beispielsweise bei Langfeldleuchten kann der Reflektor auch entsprechend wannenförmig ausgebildet sein. Der Reflektor 6 ist in den dargestellten Ausführungsbeispielen hier rückseitig offen ausgebildet, so dass das von den Leuchtmitteln 3 abgegebene und über den Lichtleiter 5 geführte Licht in den von dem Reflektor 6 hier seitlich begrenzten Leuchtenraum 2 durch Auskopplung eingeführt werden kann, um so zur Lichtabgabe über die Öffnung 41 bereitzustehen.

Der Reflektor 6 erstreckt sich bevorzugt wenigstens teilweise zwischen dem Lichtleiter 5 und dem Leuchtenraum 2, wie dies den Ausführungsbeispielen der Figuren 1-10 zu entnehmen ist. Der Reflektor 6 ist hier als separates Bauteil bereitgestellt. Grundsätzlich ist es auch denkbar, dass der Reflektor 6 wenigstens teilweise integral mit dem Leuchtengehäuse 4 ausgebildet ist.

Alternativ oder zusätzlich zu dem Reflektor 6 kann die Leuchte 1 ferner ein weiteres Reflektorelement 7 aufweisen. So kann beispielsweise der Lichtleiter 5 auf einer von der Öffnung 41 oder von dem Leuchtenraum 2 abgewandten Seite dieses Reflektorelement 7 aufweisen. Das Reflektorelement 7 liegt dabei besonders bevorzugt direkt an dem Lichtleiter 5 und vorzugsweise an einer flächigen Seite (Außenseite) 54 des Lichtleiters 5 an. Vorzugsweise kann das Reflektorelement 7 auch dort auf den Lichtleiter 5 aufgebracht sein, beispielsweise durch Beschichtung. Die Effizienz der Leuchte 1 kann so erhöht werden, indem Streulicht wieder in den Lichtleiter 5 zurückgeführt bzw. in diesem gehalten wird.

Im Folgenden werden nun unterschiedliche Ausführungsbeispiele zur Lichtauskopplung beschrieben.

So zeigt die Fig. 1 ein Ausführungsbeispiel, in dem der Lichtauskoppelbereich durch eine Strukturierung bzw. Verletzung einer flächigen Seite 54 des Lichtleiters 5 (hier bevorzugt die Außenseite 54) ausgebildet ist. An diesen Strukturen bzw. Verletzungen wird das Licht entsprechend abgelenkt und dann nach vorne über die gegenüberliegende flächige Seite

(Innenseite) 55 des Lichtleiters 5 hier nach unten in den Leuchtenraum 2 ausgekoppelt, so dass dieses zur Lichtabgabe über die Öffnung 41 dort bereitsteht. Das Licht kann dann beispielsweise ferner mittels des Reflektors 6 entsprechend gerichtet bzw. umgelenkt werden, so dass eine definierte Lichtabgabecharakteristik (beispielsweise eine Strahlercharakteristik) erzielt werden kann.

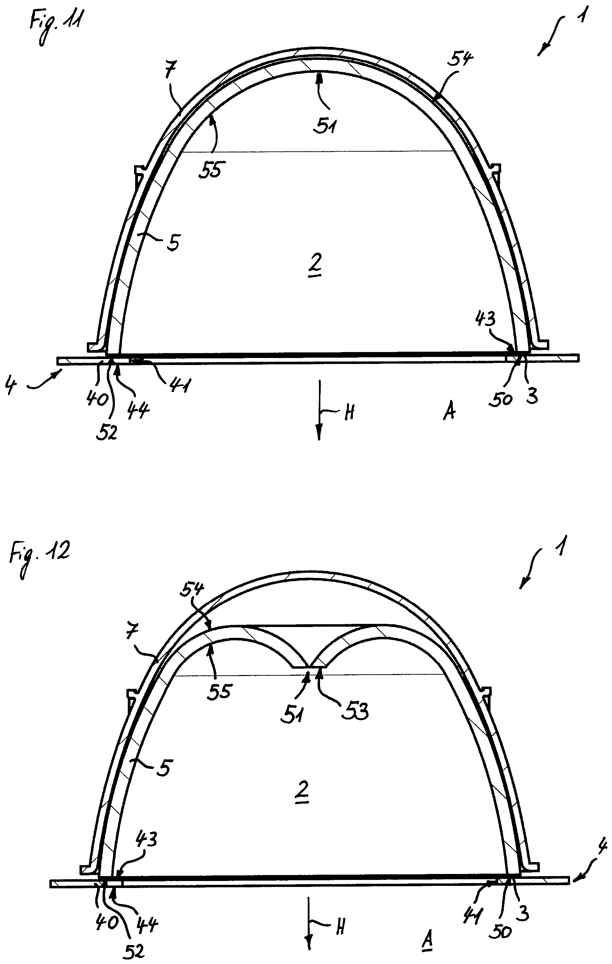

Eine ähnliche Variante hinsichtlich der Lichtauskopplung zeigt die Leuchte 1 gemäß dem Ausführungsbeispiel der Figur 11, wobei diese keinen zusätzlichen Reflektor 6 zur Begrenzung des Leuchtenraumes 2 und zur weiteren Lichtlenkung aufweist.

Figuren 2-5 zeigen ein Ausführungsbeispiel, in dem der Lichtauskoppelbereich 51 durch eine der Lichteinkoppelseite 50 gegenüberliegende Stirnseite 53 des Lichtleiters 5 gebildet ist. Wie beispielsweise der Fig. 5 zu entnehmen ist, handelt es sich hierbei um eine hier ringförmige Stirnseite 53. Das Licht wird somit rückseits des Leuchtenraumes 2 quer aus dem Lichtleiter 5 ausgekoppelt und dann in den Leuchtenraum 2 geführt; gegebenenfalls unterstützt durch das Reflektorelement 7 rückseits des Leuchtenraumes 2.

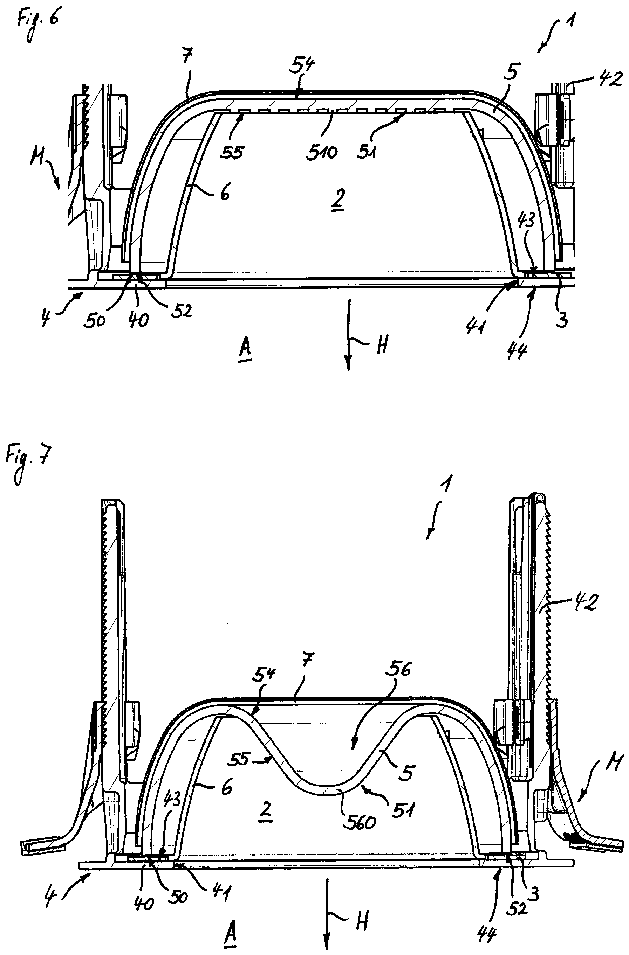

Das Ausführungsbeispiel der Fig. 6 zeigt eine Leuchte 1, in der die Lichtauskoppelbereiche 51 durch Auskoppelstrukturen 510 an einer flächigen Seite 55 (hier die zu dem Leuchtenraum 2 hin gewandte Innenseite 55) des Lichtleiters 5 gebildet sind. Bei den Auskoppelstrukturen 510 handelt es sich hier um Auskoppelvorsprünge, über welche das Licht jeweils nach unten zum Leuchtenraum 2 hin ausgekoppelt wird, um so zur Lichtabgabe über die Öffnung 41 in der Hauptabstrahlrichtung H bereitzustehen. Die Auskoppelstrukturen 510 können, wie gezeigt, beispielsweise gleichmäßig verteilt ausgebildet sein. Denkbar ist beispielsweise eine rasterförmige Anordnung. Die Auskoppelstrukturen 510 können beispielsweise in Noppen- oder Linsenform und dergleichen ausgebildet sein.

Das Ausführungsbeispiel der Figuren 7-8 zeigt einen Lichtleiter 5, welcher von dem Leuchtmittel 3 zunächst rückseits des Leuchtenraumes 2 geführt ist, um dann hier in Form einer zentralen Delle 56 in den Leuchtenraum 2 und hier zur Öffnung 41 hin vorzuragen. Die Lichtauskoppelbereiche 51 können in dieser Variante beispielsweise durch bereits vorbeschriebene Strukturen bzw. Verletzungen an dem in den Leuchtenraum 2 dellenartig ragenden Bereich 560 des Lichtleiters 5 ausgebildet sein. Auch ist es denkbar, dass die Biegung dieses geometrischen bzw. dreidimensionalen Bereichs 560 derart ist, dass keine Totalreflexion mehr möglich ist und das Licht so in den Leuchtenraum 2 ausgekoppelt wird, um so zur Lichtabgabe über die Öffnung 41 in Hauptabstrahlrichtung H bereitzustehen. Mithin kann der Lichtauskoppelbereich 51 durch einen Totalreflexion-vermeidenden bzw. geometrischen bzw. dreidimensionalen Teilabschnitt 560 des Lichtleiters 5 gebildet sein. Die Ausführungsform gemäß Fig. 9 ist vergleichbar der in Fig. 2. Auch hier werden die Lichtauskoppelbereiche 51 durch eine entsprechende und vorzugsweise der Lichteinkoppelseite 50 abgewandten Stirnseite 53 des Lichtleiters 5 gebildet. Allerdings ragt diese Stirnseite 53 nicht ringartig seitlich auf der Rückseite des Leuchtenraumes 2 vor, sondern ist hier durch leichte Biegung am Ende des Lichtleiters 5 zum Leuchtenraum 2 hin gerichtet, so dass das Licht über die Stirnseite 53 hier nach unten in den Leuchtenraum 2 ausgekoppelt wird.

Eine ähnliche Variante bildet der Lichtleiter 5 gemäß dem Ausführungsbeispiel der Fig. 12, wobei dieser keinen zusätzlichen Reflektor 6 zur Begrenzung des Leuchtenraumes 2 und ggf. zur Lichtlenkung aufweist.

Im Grunde in allen hier gezeigten Ausführungsbeispielen ist der Lichtauskoppelbereich 51 bevorzugt entgegen der Hauptabstrahlrichtung H gesehen in Verlängerung der Öffnung 41 angeordnet. Der Lichtauskoppelbereich 51 ist hier bezüglich der Hauptabstrahlrichtung H mit der Öffnung 41 fluchtend vorgesehen. Somit kann der Lichtauskoppelbereich 51 in einem bevorzugt zentralen Bereich vorgesehen sein. Auch bezüglich der Öffnung 41 kann so eine möglichst effiziente und effektive Lichtabgabe ermöglicht werden. Besonders bevorzugt ist, wie insbesondere den Figuren 1-6 und 11 zu entnehmen ist, der Lichtauskoppelbereich 51 bevorzugt bezüglich des Leuchtenraumes 2 auf der der Öffnung 41 gegenüberliegenden Seite angeordnet. Auf diese Weise ist ein möglichst langer Lichtabgabeweg innerhalb des Leuchtenraumes 2 möglich, um so unterschiedliche optische Effekte zu erzielen; wie bspw. eine ausreichende Durchmischung des Lichts zur Erzielung homogenen Lichts sowie die Erzeugung blendfreien Lichts. Auch kann so die Lichtabgabecharakteristik besonders bevorzugt beeinflusst werden. Ungeachtet der dargestellten Ausgestaltungsformen und Position der Lichtauskoppelbereiche 51 können diese grundsätzlich in jeder Art und Weise ausgebildet sowie an anderen gewünschten Positionen vorgesehen sein.

Wie insbesondere der Darstellung der Fig. 10 zu entnehmen ist, steht das Leuchtmittel 3 in thermischem Kontakt mit einer zum Leuchtenraum 2 hin gerichteten Innenseite 43 der Gehäusewand 40. Somit kann eine thermisch optimierte Positionierung der Leuchtmittel 3 ermöglicht werden. Dies ist insbesondere bei der Verwendung der Leuchte 1 in Form einer Einbauleuchte vorteilhaft, da so das Leuchtmittel 3 zur thermischen Kopplung an einer nach außen gerichteten Fläche der Leuchte 1 in einer Einbausituation vorgesehen ist. Auch bei anderen Leuchtentypen ist dies vorteilhaft, da so die Leuchte 3 in einem sicher nach außen exponierten Bereich vorgesehen ist. Durch die vorbeschriebene Anordnung und Ausgestaltung des Lichtleiters 5 sowie etwaiger weiterer optionaler Lichtführungskomponenten (bspw. Reflektor 6, Reflektorelement 7, Abdeckung 8 (wenn aufweisend optische Funktion)) kann trotz der zur thermischen Kopplung optimierten Anordnung der Leuchtmittel 3 die Lichtabgabe der Leuchte 1 in Hauptabstrahlrichtung H effektiv und besonders variantenreich erfolgen.

Die Innenseite 43 der Gehäusewand 40 ist bevorzugt entgegen der Hauptabstrahlrichtung H gerichtet, wie insbesondere den Figuren 1, 2, 6, 7, 9-12 zu entnehmen ist. Die Gehäusewand 40 und wenigstens deren Innenseite 43 erstreckt sich bevorzugt flächig und vorzugsweise ferner parallel zu einer Ebene E (vgl. bspw. Fig. 10). Somit kann eine einfache und sichere Befestigung des Leuchtmittels 3 bzw. dessen Platine 32 ermöglicht werden. Auch kann so das Leuchtmittel 3 bezüglich der Öffnung 41 versteckt vorgesehen werden, um so das ästhetische Erscheinungsbild der Leuchte 1 weiter zu steigern.

Das Leuchtmittel 3 ist bevorzugt direkt flächig an der Innenseite 43 anliegend vorgesehen, um den thermischen Kontakt bereitzustellen. Dies ist besonders der Fig. 10 zu entnehmen. Das Leuchtmittel 3 und vorzugsweise dessen Platine 32 können so bevorzugt in direktem thermischen Kontakt mit der Innenseite 43 der Gehäusewand stehen, um eine besonders effektive Kühlleistung zu bewirken.

Wie insbesondere der Fig. 10 zu entnehmen ist, kann eine Lichtabgaberichtung L des Leuchtmittels 3 zum Lichtleiter 5 hin entgegengesetzt der Hauptabstrahlrichtung H der Leuchte 1 sein. Dies ergibt sich beispielsweise bei Vorsehen des Leuchtmittels 3 als LED-Modul 30 und flächiger Auflage desselben auf der flächigen Innenseite 43 der Gehäusewand 40. Diese Lichtabgaberichtung L ermöglicht eine einfache Ausgestaltung und Positionierung des Lichtleiter 5 relative zum Leuchtmittel 3 zur Ermöglichung einer möglichst effektiven Einkopplung des Lichts des Leuchtmittels 3 in den Lichtleiter 5. Beispielsweise durch seine gebogene Form kann das Licht des Leuchtmittels 3 dann in jeder gewünschten Weise in den Leuchtenraum 2 ausgekoppelt werden.

Die Leuchte 1 kann bevorzugt auch mehrere der Leuchtmittel 3 aufweisen, welche beispielsweise in Ausgestaltung als LED-Modul 30 dann mit ihrer Platine 32 jeweils in thermischem Kontakt mit der Innenseite 43 der Gehäusewand 40 stehen und jeweils ihr Licht über die Lichteinkoppelseite 50 in den einen oder auch mehrere entsprechende Lichtleiter 5 entsprechend einkoppeln, wie dies zuvor bereits beschrieben wurde. Die Bereitstellung mehrerer Leuchtmittel 3 ist beispielsweise dann vorteilhaft, wenn es sich bei der Leuchte 1 um eine Langfeldleuchte handelt, so dass beidseits der Öffnung 41 vorgesehene Leuchtmittel 3 dann entsprechend Licht in den oder die Lichtleiter 5 bspw. über entsprechende Stirnseiten 52 einkoppeln können, um so eine homogene Lichteinkopplung und damit insgesamt homogene Lichtabgabe der Leuchte 1 zu bewirken. Auch kann bei einer komplexer gestalteten Lichteinkoppelseite 50 durch Bereitstellung mehrerer Leuchtmittel 3 die Komplexität letzterer Vereinfach werden, während gleichzeitig eine effektive Lichteinkopplung ermöglicht wird.

Wie bereits erwähnt können die Leuchtmittel 3 an gegenüberliegenden Seiten der Öffnung 41 vorgesehen sein. Dies beispielsweise in Ausgestaltung der Leuchte 1 als Langfeldleuchte. In den hier dargestellten kompakten und ringförmig geschlossenen Leuchtenformen ist es auch denkbar, dass das oder die Leuchtmittel 3 die Öffnung 41 wenigstens teilweise oder vollständig umgebend vorgesehen ist/sind. Selbiges gilt im Übrigen auch für die einzelnen LEDs 31 eines Leuchtmittels 3. So kann beispielsweise bei der vorbeschriebenen Ringform der Platine 32 die Vielzahl von LEDs 31 derart vorgesehen sein, dass diese über die gesamte Ringform oder wenigstens einen Teil derselben verteilt angeordnet sind. Das so ringförmig ausgebildete Leuchtmittel 3 wird dann an der Innenseite 43 der Gehäusewand 40 die Öffnung 41 umgebend angeordnet. Somit kann eine besonders kompakte und thermisch optimierte Leuchte 1 bereitgestellt werden.

Eine von dem Leuchtenraum 2 abgewandte und nach außen, also zur Vorderseite der Leuchte 1 gerichtete Außenseite 44 der Gehäusewand 40 kann sich bevorzugt flächig erstrecken. Dies, wie in den Ausführungsbeispielen der Figuren gezeigt (vgl. bspw. Fig. 10), vorzugsweise parallel zu einer oder auch der vorbeschriebenen Ebene E. Somit kann die Leuchte 1 ein ästhetisch ansprechendes Erscheinungsbild erhalten. Auch ist eine so entsprechend flach ausgestaltete Gehäusewand 40 insbesondere bei Einbauleuchten vorteilhaft, um die Gehäusewand 40 optisch nur möglichst gering hervorzuheben oder gar derart bereitzustellen, dass diese einfach verputzt werden kann, nachdem die Leuchte 1 in eine Einbauausnehmung eingesetzt wurde und die Gehäusewand 40 sich bevorzugt bündig mit der umgebenden Montagefläche eines Montagebereichs erstreckt.

Es ist jedoch auch denkbar, dass die Außenseite 44 hier in den Figuren nicht gezeigte Strukturen aufweist. Diese können einerseits aus ästhetischen Gründen vorgesehen sein. Auch ist es denkbar, dass diese Strukturen in Form von Kühlstrukturen, wie Kühlrippen, ausgebildet sind, um so die Kühlfläche zu vergrößern und damit insgesamt die Kühlleistung der Leuchte 1 zu steigern. In einer bevorzugten Ausgestaltungsform ist es denkbar, dass diese Strukturen sich auf der anderen Seite der Gehäusewand 40, also auf der dem Leuchtenraum 2 zugewandten Innenseite 43, fortsetzen und dort bestimmte Teile der Leuchte 1 bilden, wie beispielsweise den zuvor beschriebenen Reflektor 6 oder das Reflektorelement 7.

Die Erfindung ist durch die vorbeschriebenen Ausführungsbeispiele nicht beschränkt, sofern sie vom Gegenstand der folgenden Ansprüche umfasst ist. Die Merkmale der unterschiedlichen Ausführungsbeispiele sind in beliebiger Weise mit und untereinander kombinierbar und austauschbar.

## Patentansprüche

1. Leuchte (1), aufweisend:
einen Leuchtenraum (2),
ein Leuchtmittel (3) zur Abgabe von Licht in den Leuchtenraum (2),
ein Leuchtengehäuse (4) mit einer den Leuchtenraum (2) an einer Vorderseite der Leuchte (1) begrenzenden Gehäusewand (40), wobei die Gehäusewand (40) eine Öffnung (41) zur Lichtabgabe des in den Leuchtenraum (2) abgegebenen Lichts des Leuchtmittels (3) nach außen (A) in einer Hauptabstrahlrichtung (H) der Leuchte (1) aufweist, und
einen Lichtleiter (5), wobei sich der Lichtleiter (5) derart zwischen dem Leuchtmittel (3) und dem Leuchtenraum (2) erstreckt, um das von dem Leuchtmittel (3) abgegebene Licht über eine Lichteinkoppelseite (50) in den Lichtleiter (5) einzukoppeln und das so eingekoppelte Licht über einen Lichtauskoppelbereich (51) in den Leuchtenraum (2) zur Lichtabgabe über die Öffnung (41) auszukoppeln,
wobei das Leuchtmittel (3) in thermischem Kontakt mit einer zum Leuchtenraum (2) hin gerichteten Innenseite (43) der Gehäusewand (40) steht.

2. Leuchte (1) nach Anspruch 1, wobei die Lichteinkoppelseite (50) durch eine Stirnseite (52) des Lichtleiters (5) gebildet ist, und/oder
wobei das Leuchtmittel (3) der Lichteinkoppelseite (50), vorzugsweise der Stirnseite (52), direkt gegenüberliegt oder an dieser direkt anliegt.

3. Leuchte (1) nach einem der vorhergehenden Ansprüche, wobei der Lichtauskoppelbereich (51) durch eine Verletzung einer flächigen Seite (54) des Lichtleiters (5), und/oder durch Auskoppelstrukturen (510) an einer flächigen Seite (55) des Lichtleiters (5), wie ein Auskoppelvorsprung, und/oder durch eine bevorzugt der Lichteinkoppelseite (50) gegenüberliegende Stirnseite (53) des Lichtleiters (5), und/oder durch einen Totalreflexion-vermeidenden Teilabschnitt 560 des Lichtleiters (5) gebildet ist, und/oder
wobei der Lichtauskoppelbereich (51) entgegen der Hauptabstrahlrichtung (H) gesehen in Verlängerung der Öffnung (41) angeordnet ist, und/oder wobei der Lichtauskoppelbereich (51) bezüglich der Hauptabstrahlrichtung (H) mit der Öffnung (41) fluchtet, und/oder
wobei der Lichtauskoppelbereich (51) bezüglich des Leuchtenraumes (2) auf der der Öffnung (41) gegenüberliegenden Seite angeordnet ist.

4. Leuchte (1) nach einem der vorhergehenden Ansprüche, wobei der Lichtleiter (5) gebogen ausgebildet ist, um den Leuchtenraum (2) wenigstens teilweise zu umspannen, und/oder
wobei der Lichtleiter (5) eine Topfform oder Schalenform oder Wannenform aufweist.

5. Leuchte (1) nach einem der vorhergehenden Ansprüche, ferner aufweisend einen Reflektor (6), welcher den Leuchtenraum (2) wenigstens teilweise begrenzt, um in den Leuchtenraum (2) abgegebenes Licht der Leuchtmittel (3) über die Öffnung (41) gerichtet abzugeben,
wobei sich der Reflektor (6) vorzugsweise wenigstens teilweise zwischen dem Lichtleiter (5) und dem Leuchtenraum (2) erstreckt, und/oder wobei der Reflektor (6) vorzugsweise wenigstens teilweise integral mit dem Leuchtengehäuse (4) ausgebildet ist.

6. Leuchte (1) nach einem der vorhergehenden Ansprüche, wobei der Lichtleiter (5) auf einer von der Öffnung (41) oder von dem Leuchtenraum (2) abgewandten Seite ein Reflektorelement (7) aufweist, welches bevorzugt direkt an dem Lichtleiter (5), vorzugsweise an einer flächigen Seite (54) des Lichtleiters (5), anliegt oder dort auf den Lichtleiter (5) aufgebracht ist.

7. Leuchte (1) nach einem der vorhergehenden Ansprüche, wobei das Leuchtmittel (3) wenigstens eine LED (31) aufweist, und vorzugsweise ein LED-Modul (30) mit auf einer Platine (32) aufgebrachter LED (31) umfasst,
wobei die Platine (32) vorzugsweise eine längliche und ferner bevorzugt geradlinige Form aufweist, oder
wobei die Platine (32) vorzugsweise eine gebogene Form aufweist, wie eine Ringform, eine Kreisform oder eine ring- oder kreissegmentartige Form.

8. Leuchte (1) nach einem der vorhergehenden Ansprüche, wobei eine Lichtabgaberichtung (L) des Leuchtmittels (3) zum Lichtleiter (5) hin der Hauptabstrahlrichtung (H) der Leuchte (1) entgegengesetzt ist.

9. Leuchte (1) nach einem der vorhergehenden Ansprüche, wobei das Leuchtmittel (3), vorzugsweise die Platine (32), wenn vorhanden, in direktem thermischen Kontakt mit der Innenseite (43) der Gehäusewand (40) steht, und/oder
wobei die Leuchte (1) mehrere der Leuchtmittel (3) aufweist, welche, vorzugsweise mit ihrer Platine (32), wenn vorhanden, jeweils in thermischem Kontakt mit der Innenseite (43) der Gehäusewand (40) stehen und jeweils ihr Licht über die Lichteinkoppelseite (50) in den Lichtleiter (5) entsprechend einkoppeln, wobei die Leuchtmittel (3) vorzugsweise an gegenüberliegenden Seiten der Öffnung (41) oder die Öffnung (41) wenigstens teilweise oder vollständig umgebend vorgesehen sind.

10. Leuchte (1) nach einem der vorhergehenden Ansprüche, wobei die Innenseite (43) entgegen der Hauptabstrahlrichtung (H) gerichtet ist, und/oder wobei die Gehäusewand (40), wenigstens deren Innenseite (43), sich flächig erstreckt, vorzugsweise parallel zu einer Ebene (E).

11. Leuchte (1) nach einem der vorhergehenden Ansprüche, wobei das oder die Leuchtmittel (3) direkt flächig an der Innenseite (43) anliegt/anliegen, um den thermischen Kontakt bereitzustellen.

12. Leuchte (1) nach einem der vorhergehenden Ansprüche, wobei eine von dem Leuchtenraum (2) abgewandte und nach außen gerichtete Außenseite (44) der Gehäusewand (40) sich flächig erstreckt, vorzugsweise parallel zu einer oder der Ebene (E),
wobei die Außenseite (44) vorzugsweise Strukturen aufweist, ferner vorzugsweise Kühlstrukturen wie Kühlrippen.

13. Leuchte (1) nach einem der vorhergehenden Ansprüche, wobei das Leuchtengehäuse (4) aus einem gut Wärme-leitenden Material, wie Aluminium, hergestellt ist, und/oder mit einem gut Wärme-leitenden Material beschichtet ist.

14. Leuchte (1) nach einem der vorhergehenden Ansprüche, wobei das Leuchtengehäuse (4) eine Tragstruktur (42) zur Befestigung der Leuchte (1) an einem Montagebereich (M) aufweist,
wobei sich die Tragstruktur (42) vorzugsweise zur Seite des Leuchtenraumes (2) hin oder entgegen der Hauptabstrahlrichtung (H) von der Gehäusewand (40) weg rückseitig erstreckt, und/oder
wobei die Tragstruktur (42) vorzugsweise integral mit der Gehäusewand (40) ausgebildet ist.

15. Leuchte (1) nach einem der vorhergehenden Ansprüche, wobei die Leuchte (1) eine Einbauleuchte, eine Anbauleuchte, oder eine Pendelleuchte ist, und/oder wobei die Leuchte (1) eine längliche Form oder eine runde oder eckige, wie quadratische oder rechteckige, Form aufweist.
